# EUROPÄISCHE PATENTSCHRIFT

(11) **EP 1 430 983 B1**
(45) Veröffentlichungstag und Bekanntmachung des Hinweises auf die Patenterteilung: **16.04.2008**
(21) Anmeldenummer: 03090402.3
(22) Anmeldetag: 25.11.2003
(51) Int. Cl.: B23H 3/00, B23H 9/10

(54) **Verfahren zur Formgebung durch elektrochemisches Abtragen**
Method for electrochemical shaping
Méthode pour formage électrochimique

(30) Priorität: 17.12.2002 DE 10250892
(43) Veröffentlichungstag der Anmeldung: 23.06.2004
(73) Patentinhaber: Rolls-Royce Deutschland Ltd & Co KG, 15827 Dahlewitz (DE)
(72) Erfinder: Mielke, Rainer, 61440 Oberursel (DE)
(74) Vertreter: Wablat, Wolfgang

(56) Entgegenhaltungen:
- EP-A- 0 292 213
- EP-A- 1 249 294

## Beschreibung

Die Erfindung betrifft ein Verfahren zur Formgebung kompliziert geformter Bauteile, insbesondere Laufrädern mit einstückig angeformten Schaufeln für Strömungsmaschinen, mittels elektrochemischem Abtragen.

Bei einstückig ausgebildeten, aus dem vollen Material geformten Laufrädern für Gebläse, Verdichter und Turbinen, zum Beispiel den in Bliskbauweise ausgebildeten Laufrädern von Strahltriebwerken, erfolgt die Ausformung der in komplexer 3D-Geometrie gekrümmten Schaufeln bekanntermaßen durch spanende Formgebung mit einem Fräswerkzeug. Aufgrund der starken Krümmung der Schaufeln und der komplizierten Spaltform zwischen den Schaufeln können deren Geometrien nicht mehr im Flankenkontakt hergestellt werden. Daher ist die Formgebung nur im Punktkontakt möglich. Dieses Verfahren ist äußerst zeitaufwendig und kostenaufwendig und daher für eine Serienproduktion von beispielsweise in Bliskbauweise hergestellten Verdichterscheiben nur bedingt geeignet. Zudem ist nach dem Fräsvorgang eine zusätzliche Bearbeitung der aufgrund des Punktfräsens profilierten Oberfläche in einem Schleifprozess erforderlich.

Auch die Reparatur eines Laufrades, bei der beschädigte Schaufeln oder Schaufelteile ersetzt oder durch Kokillenschweißen, Auftragsschweißen und dgl. ausgebessert werden, erfordert eine aufwendige spangebende Nachbearbeitung der reparierten Schaufel.

Ein allgemein bekanntes Formgebungsverfahren durch Materialabtrag, wie es beispielsweise in der DE 29 03 873 beschrieben ist, basiert auf einer elektrochemischen Bearbeitung des Werkstückes, bei der eine entsprechend geformte Elektrode in geringem Abstand linear oberhalb der mit einem Elektrolyten beaufschlagten Werkstückoberfläche schwingt und bei einem linearen Vorschub der Elektrode das Material entsprechend der Elektrodenform abträgt. Das elektrochemische Abtragen des Materials erfolgt nach dem sogenannten ECM-Verfahren (electro-chemical machining) und dem PEM-Verfahren (precise electro-chemical machining) in der Weise, dass die eine lineare Oszillation ausführenden Elektrode zum Zeitpunkt des geringsten Abstandes vom zu bearbeitenden, mit einem Elektrolyten umgebenen Werkstück mit einem Spannungsimpuls beaufschlagt wird. Das weiterentwickelte PEM-Verfahren, bei dem kein Elektrodenverschleiß und keine thermische Beeinflussung des zu bearbeitenden Werkstücks auftritt, zeichnet sich durch eine hohe Bearbeitungsgenauigkeit und Oberflächengüte aus.

In der US 4 999 093 wurde bereits die Anwendung der bekanntermaßen vorteilhaften elektrochemischen Formgebung bei der Herstellung von Turbinenschaufeln oder sonstiger Bauteile mit dreidimensional gekrümmter Form vorgeschlagen. Die dort beschriebene Vorrichtung ist jedoch wegen der dreidimensional gekrümmten, komplizierten Gestalt des jeweils zwischen zwei benachbarten Schaufeln auszuformenden Spaltes nicht zur Herstellung von einstückig, zum Beispiel in Bliskbauweise gefertigten Laufrädern mit aus dem vollen Material ausgeformten Schaufeln, geeignet.

Aus der EP 0 292 213 A1, welche als nächstliegender Stand der Technik anzusehen ist, ist ein Verfahren zur Herstellung einer mit Schaufeln versehenen Scheibe durch elektrochemische Bearbeitung bekannt, bei dem die gegenüberliegenden Schaufelflächen jeweils mit ersten und zweiten Elektroden bearbeitet werden, wobei sich während der Bearbeitung die ersten und zweiten Elektroden in Richtung der Schaufelflächen bewegen und drehen und die betreffende Schaufel der Scheibe in Richtung der Elektroden bewegt wird. Durch eine Drehbewegung des Werkstücks wird ein nachfolgender Schaufelrohling auf die Elektroden ausgerichtet, um anschließend in der zuvor beschriebenen Weise die Schaufel am Umfang der Scheibe durch elektrochemische Bearbeitung herzustellen.

Der Erfindung liegt die Aufgabe zugrunde, ein Verfahren zur elektrochemischen Bearbeitung von Werkstücken anzugeben, mit dem kompliziert geformte Bauteile, insbesondere einstückig ausgebildete Laufräder mit aus dem vollen Material ausgeformten gekrümmten Schaufeln für Strömungsarbeitsmaschinen, mit geringem Arbeitsaufwand gefertigt bzw. repariert werden können.

Erfindungsgemäß wird die Aufgabe mit einem Verfahren gemäß den Merkmalen des Patentanspruchs 1 gelöst.

Aus den Unteransprüchen ergeben sich weitere Merkmale und vorteilhafte Weiterbildungen der Erfindung.

Der Grundgedanke des erfindungsgemäßen Verfahrens zur elektrochemischen Bearbeitung von Werkstücken besteht dabei darin, dass synchron mit der linearen Schwingung der Elektrode oder des Werkstücks eine Zirkularoszillation der Elektrode oder des Werkstücks erfolgt, so dass sich eine kompliziert geformte Elektrode, etwa in Gestalt einer dreidimensional gekrümmten Verdichterschaufel, mit sehr geringem Materialabtrag in das zu bearbeitende Werkstück gleichsam hineindrehen kann. Eine weitere Ausformung bis zur exakten Spaltbreite und Schaufelform erfolgt ohne weitere Linearoszillation nur durch anschließende Zirkularoszillation in Verbindung mit einem Zirkularvorschub in der einen und/oder der anderen Drehrichtung. Auf diese Weise ist es möglich, kompliziert geformte Gebilde, zum Beispiel einstückig angeformte, dreidimensional gekrümmte Schaufeln und mithin aus einem Stück gefertigte Turbinenlaufräder (sog. Bliskscheiben) durch elektrochemische Bearbeitung in höchster Genauigkeit und Oberflächengüte sowie spannungsfrei herzustellen oder zu reparieren, so dass die bei den bekannten Verfahren zur Herstellung von Bliskscheiben erforderliche Nacharbeit zur Oberflächenglättung entfällt und der Herstellungs- und Reparaturaufwand wesentlich verringert wird.

Ein weiteres wichtiges Erfindungsmerkmal, zum Beispiel bei der Herstellung von Verdichterschaufelrädern, besteht zudem darin, dass unter Anwendung des obigen Verfahrens mit einem auf herkömmliche Art hergestellten Musterwerkstück, das als Elektrode benutzt wird, durch elektrochemisches Abtragen eine in dem weiteren Verfahren als Arbeitselektrode fungierende Werkstücknegativelektrode hergestellt wird, die zunächst nur in einen Rohling eingesenkt wird und bei der anschließenden Zirkularoszillation die Schaufeln endgültig ausformt.

Die synchron ablaufenden Linear- und Zirkularbewegungen können sowohl von der Elektrode (Elektrodenhalter) als auch von dem zu bearbeitenden Werkstück (Werkstückaufnahme) oder auch von dem Werkstück und der Elektrode ausgeführt werden.

Bei der Serienfertigung von Verdichterrädern führt die Elektrode vorzugsweise die Linearbewegungen und das Werkstück vorzugsweise die Zirkularbewegungen aus.

Das Verfahren kann auch vorteilhaft bei der Reparatur von Verdichterscheiben oder Verdichterscheibentrommeln angewendet werden. In diesem Fall erfolgt die Drehbewegung, das heißt, die zirkularoszillation und der Zirkularvorschub der Scheibe bzw. Trommel um eine zur Linearbewegung der Elektrode senkrechte Achse. Außerdem ist die Elektrode in der X- und der Y-Achse verschiebbar.

Ein Ausführungsbeispiel der Erfindung wird anhand der Zeichnung näher erläutert. Es zeigen:
- Fig. 1 bis 8: eine vereinfachte schematische Darstellung der einzelnen erfindungsgemäßen Verfahrensschritte zur Herstellung des Schaufelkranzes eines Verdichterlaufrades, wobei in der Zeichnung jeweils nur ein bestimmter Sektor des Werkzeugs und des Werkstücks bzw. Schaufelkranzes in Abwicklung wiedergegeben ist;
- Fig. 9: eine schematisierte Ansicht einer Vorrichtung mit überlagerter Zirkularoszillation/-vorschub um eine vertikale Achse zur Herstellung kompliziert geformter Bauteile durch elektro-chemisches Abtragen von Werkstoff nach dem PEM-Verfahren; und
- Fig. 10: eine Darstellung der Vorrichtung nach Fig. 9, jedoch mit Zirkularoszillation/-vorschub um eine horizontale Achse.

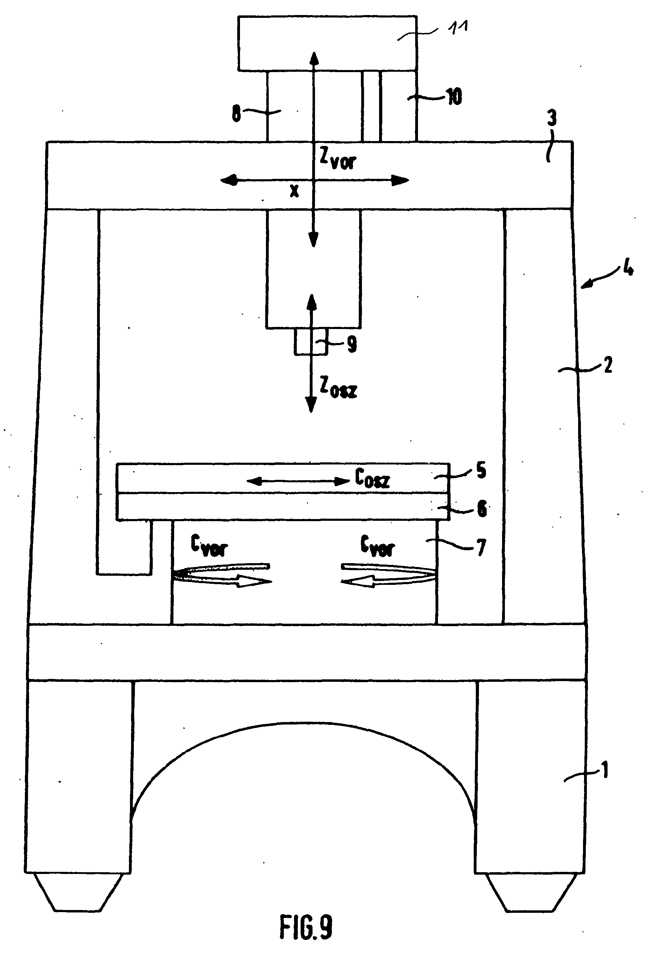

Zur Druchführung des Verfahrens wird beispielsweise eine Vorrichtung gemäß Fig. 9 eingesetzt, die ein aus einem Sockel 1, Seitenwangen 2 und einem Querholm 3 gebildetes Maschinengehäuse 4 umfasst. Auf dem Sockel 1 befindet sich eine Werkstückaufnahme 5, das heißt, ein Arbeitstisch, auf dem während des Betriebs der Vorrichtung ein zu bearbeitendes Werkstück (nicht dargestellt) gehalten ist. Der Arbeitstisch/die Werkstückaufnahme 5 ist mit einem Drehschwingantrieb 6 (erstes Antriebsorgan) verknüpft, um den Arbeitstisch 5 und damit das zu bearbeitende Werkstück um eine vertikale Mittelachse in eine Zirkularschwingung (Zirkularoszillation, Pfeil C_{osz}) zu versetzen. Ein weiterer, mit dem Drehschwingantrieb 6 verbundener Drehvorschubantrieb 7 (zweites Antriebsorgan) gewährleistet gleichzeitig mit der Zirkularvibration eine lineare horizontale Drehvorschubbewegung (Pfeil Cᵥₒᵣ) der Werkstückaufnahme 5 in jeweils entgegengesetzten Richtungen.

Auf dem Maschinenportal 3 ist ein auf diesem entsprechend dem Doppelpfeil X verschiebbar gelagerter Werkzeugschlitten 8 mit Elektrodenhalter 9 angeordnet. Der in dem Werkzeugschlitten 8 linear beweglich geführte Elektrodenhalter 9 kann eine lineare Schwingung (Linearoszillation, Doppelpfeil Z_{osz}) sowie eine der linearen Vibration überlagerte lineare vertikale Vorschubbewegung (Doppelpfeil Zᵥₒᵣ) ausführen und ist zu diesem Zweck ebenfalls mit einem (dritten und vierten) Antrieb 10 für die lineare Vorschubbewegung und die lineare Schwingbewegung verbunden. Die horizontale Vorschubbewegung des Werkzeugschlittens 8 bewirkt ein fünfter Antrieb.

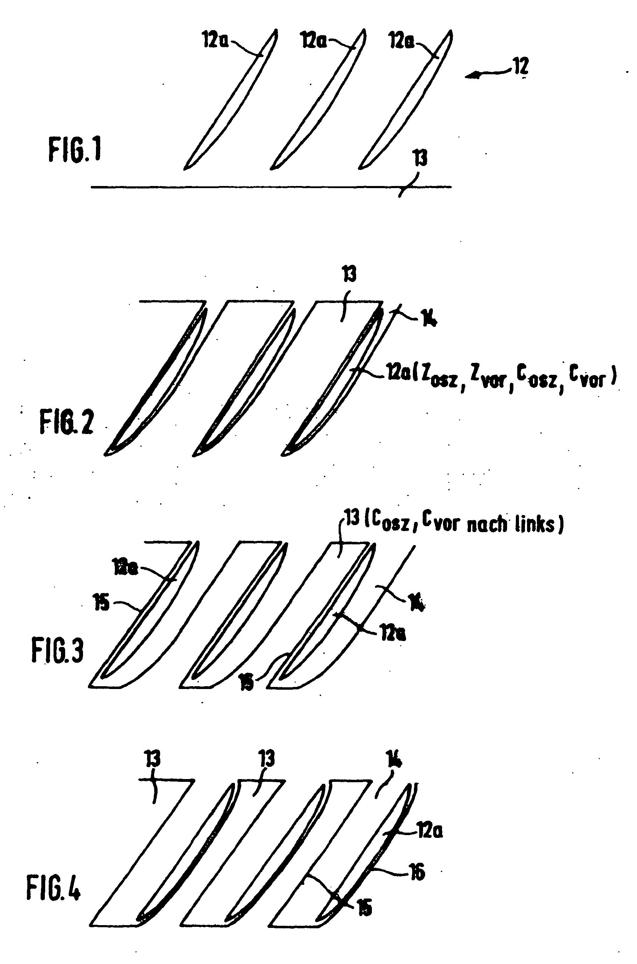

Die Funktion der oben beschriebenen Vorrichtung und das mit deren Hilfe durchgeführte erfindungsgemäße Verfahren werden nachfolgend am Beispiel der Herstellung eines einstückig ausgebildeten Verdichterlaufrades (Bliskscheibe eines Triebwerkes) anhand der Figuren 1 bis 8 erläutert:

Zunächst wird in einem ersten Verfahrensschritt aus einem kostengünstig zur Verfügung stehenden elektrisch leitfähigen Material nach einem herkömmlichen spangebenden Formgebungsverfahren ein Musterwerkstück 12, hier ein Verdichterlaufrad mit am Umfang ausgebildeten Schaufeln 12a, hergestellt. Der Einfachheit halber ist in den Figuren 1 bis 8 jeweils nur ein Teil des Werkzeugs bzw. des Werkstücks mit jeweils drei Schaufeln 12a dargestellt.

Anschließend wird das Musterwerkstück 12 (12a) aus leitfähigem Material am Elektrodenhalter 9 angebracht, während auf dem darunter befindlichen Arbeitstisch 5 ein Elektrodenrohling 13 (Rohling aus einem Elektrodenmaterial, zum Beispiel Messing) gehalten ist (vgl. Fig. 1).

In dem darauffolgenden Schritt 2 wird das jetzt als Elektrode (Musterelektrode) dienende, in lineare Schwingungen Z_{osz} versetzte Musterwerkstück 12, das heißt, die einzelnen Schaufeln 12a, bei gleichzeitiger Zirkularvibration C_{osz} des Elektrodenrohlings 13 und allmählichem vertikalem Vorschub Zvor und zirkularem Vorschub Cvor des Musterwerkstücks unter elektrochemischem Materialabtrag in den Elektrodenrohling 13 abgesenkt (Fig. 2).

Im nächsten Verfahrensschritt 3 gemäß Fig. 3 wird in den Ausnehmungen 14 des Elektrodenrohlings 13 jeweils zunächst die Negativform der Druckseite 15 der Schaufeln 12a des Musterwerkstücks 12 ausgeformt, indem eine Zirkularvibration C_{osz} und gleichzeitig eine in der Zeichnung nach links gerichtete horizontale Drehvorschubbewegung des Elektrodenrohlings 13 erzeugt wird.

Gemäß Fig. 4 wird in Schritt 4 der Elektrodenrohling 13 bei anhaltender Zirkularoszillation C_{osz} entsprechend der Vorschubbewegung Cᵥₒᵣ nach rechts bewegt, um in den Ausnehmungen 14 des Elektrodenrohlings 13 die Negativforn der Saugseite 16 der Schaufeln 12a zu formen.

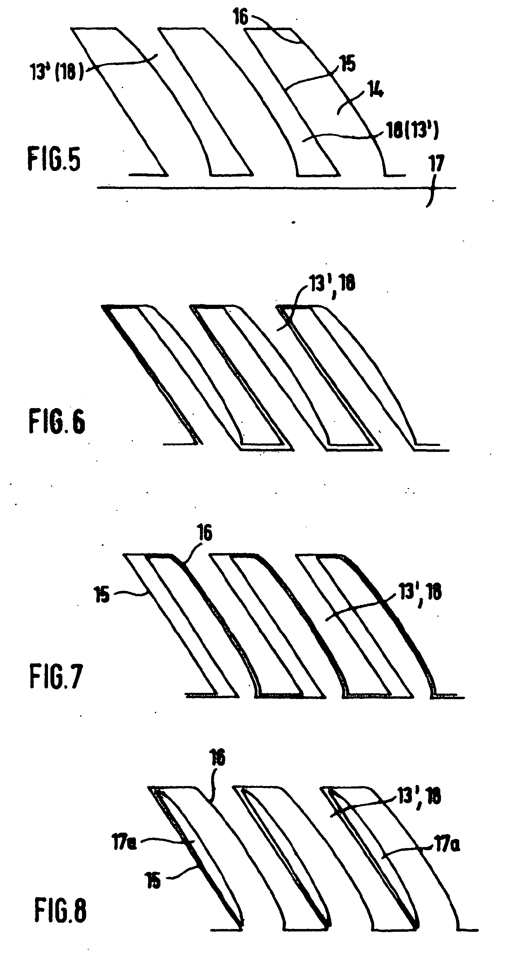

In Fig. 5 ist die in den vorangegangenen Schritten 1 bis 4 aus dem Elektrodenrohling 13 hergestellte neue Elektrode oder Arbeitselektrode 13' für eine nach dem PEM-Verfahren durchgeführte Serienfertigung von Bauteilen, deren Form dem oben erwähnten Musterwerkstück 12 entspricht, wiedergegeben. Die Arbeitselektrode 13' ist zwar nicht in Bezug auf die Wandstärke, aber hinsichtlich der Form der Druck- und der Saugseite der Schaufeln 12a das perfekte Negativ des Musterwerkstücks 12.

Für die Serienfertigung wird nun die Arbeitselektrode 13' am Elektrodenhalter 9 der in Fig. 9 beschriebenen Vorrichtung angebracht, und auf dem Arbeitstisch 5 ist ein Rohling 17 eingespannt, an dem die gewünschte Gestalt ausgeformt werden soll, um durch elektrochemisches Abtragen beispielsweise Verdichterscheiben (Bliskscheiben) aus einem luftfahrtgeeigneten oder schwerzerspanbaren Werkstoff einfach, schnell und präzise herstellen zu können.

Gemäß Fig. 6 werden bei gleichzeitiger Linearoszillation Z_{osz} der Arbeitselektrode 13' (Elektrodenhalter 9) und Zirkularoszillation C_{osz} des Rohlings 17 (Arbeitstisch 5) sowie allmählichem vertikalem Vorschub Zᵥₒᵣ und Cᵥₒᵣ der Arbeitselektrode 13 (Elektrodenhalter 9) in einem fünften Verfahrensschritt an dem Rohling 17 zunächst Stege als Vorstufe der Schaufeln geformt. In zwei weiteren Verfahrensschritten (6 und 7) werden dann die Schaufeln 17a unter Beibehaltung der Zirkularoszillation C_{osz} des Rohlings 17, und bei allmählichem Drehvorschub Cᵥₒᵣ des Rohlings 17 zunächst in der einen Richtung (Fig. 7, Schritt 6) und dann in der entgegengesetzten Drehrichtung (Fig. 8, Schritt 7) auf ihre exakte Wandstärke und dreidimensional gewölbte Gestalt fertiggeformt.

Für die Serienfertigung werden die in den Figuren 5 bis 8 dargestellten Verfahrensschritte 5 bis 7 beliebig oft wiederholt, um auf diese Art mit gegenüber den bekannten Fräsverfahren erheblich verringertem Zeit- und Arbeitsaufwand Verdichterscheiben (Bliskscheiben) in höchster Fertigungsgenauigkeit herzustellen.

Nach dem oben anhand der Figuren 1 bis 8 beschriebenen Verfahren und der entsprechenden Vorrichtung nach Figur 9, deren wesentliches Merkmal darin besteht, dass der linearen Oszillation mit linearem Vorschub eine zirkulare Oszillation und eine Drehvorschubbewegung in der einen und der anderen Richtung überlagert ist, können Schaufelkränze oder Sektionen von diesen oder auch einzelne Schaufeln, zum Beispiel ersetzte oder reparierte Schaufeln, durch elektrochemisches Abtragen nach dem PEM-Verfahren in einem engsten Toleranzbereich geformt bzw. fertiggeformt werden. Die im Ausführungsbeispiel beschriebene Methode ist selbstverständlich auch für andere Anwendungsfälle zur Herstellung kompliziert geformter Bauteile, für die die elektrochemische Bearbeitung aufgrund der für die Elektrode nicht erreichbaren Werkstückbereiche bisher nicht einsetzbar war, geeignet. In bestimmten Anwendungsfällen (Werkstückformen) kann die lineare Oszillation auch getrennt von der zirkularen Oszillation durchgeführt werden, indem die Elektrode zunächst ausschließlich durch Linearoszillation in das Werkstück eindringt und anschließend ausschließlich durch Zirkularoszillation das Werkstück in zu der linearen Bearbeitung senkrechter Richtung weiter ausformt. Gleichermaßen ist die Erfindung hinsichtlich der Zuordnung der jeweiligen Schwing- und Vorschubbewegungen nicht auf das Ausführungsbeispiel beschränkt. Beispielsweise können die Linear- und Zirkularoszillation und/oder der Linear- und Zirkularvorschub auch ausschließlich von der Elektrode ausgeführt werden.

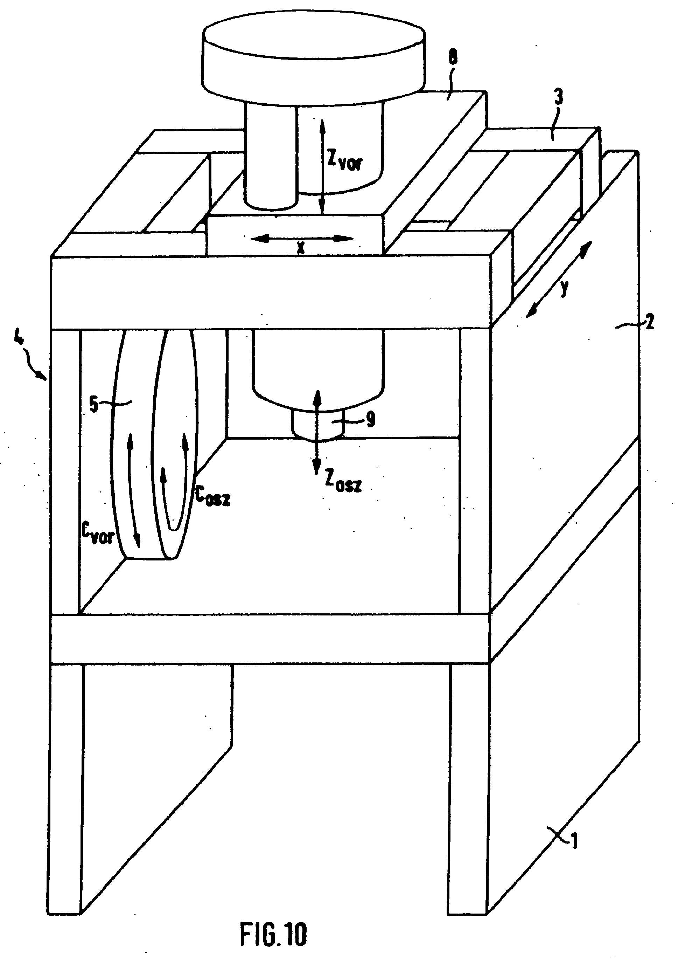

Fig. 10 zeigt eine Ausführungsvariante der in Fig. 9 dargestellten Vorrichtung, bei der, um an einem Schaufelrad oder einer aus mehreren nebeneinander angeordneten Schaufelrädern gebildeten Trommel einzelne Schaufeln ausformen bzw. die Reparatur einer einzelnen Schaufel vornehmen zu können, der Werkzeugschlitten 8 auf dem Maschinenportal 3 sowohl in der X-Richtung als auch in der Y-Richtung verfahrbar ist und die Zirkularoszillation C_{osz} sowie der Zirkularvorschub Cᵥₒᵣ um eine horizontale Achse, in der die zu bearbeitende Trommel angeordnet ist, erfolgen.

### Bezugszeichenliste

- 1: Sockel
- 2: Seitenwangen
- 3: Maschinenportal
- 4: Maschinengehäuse
- 5: Werkstückaufnahme (Arbeitstisch)
- 6: Drehschwingantrieb (1. Antrieb)
- 7: Drehvorschubantrieb (2. Antrieb)
- 8: Werkzeugschlitten
- 9: Elektrodenhalter
- 10: 3./4. Antrieb
- 12: Musterwerkstück
- 12a: Schaufel
- 13: Elektrodenrohling
- 13': Arbeitselektrode (Werkstücknegativelektrode)
- 14: Ausnehmung in 13
- 15: Negativform v. Schaufeldruckseite
- 16: Negativform v. Schaufelsaugseite
- 17: Rohling
- 17a: Schaufel
- 18: Stege v. 13'
- Pfeil C_{osz}: Zirkularoszillation
- Pfeil Cᵥₒᵣ: Zirkularvorschub
- Pfeil Z_{osz}: Linearvibration
- Pfeil Zᵥₒᵣ: Linearvorschub
- Pfeil X: hor. Schlittenvorschub X-Achse
- Pfeil Y: hor. Schlittenvorschub Y-Achse

## Patentansprüche

1. Verfahren zur Formgebung kompliziert geformter Bauteile, insbesondere Laufräder mit einstückig angeformten Schaufeln für Strömungsarbeitsmaschinen, mittels elektrochemischem Abtragen, bei dem unter Anwesenheit eines Elektrolyten relativ zueinander eine Linearoszillation (z_{osz}) einer Elektrode (12, 13') oder eines zu bearbeitenden Werkstücks oder Rohlings (13, 17) bei gleichzeitigem allmählichem Linearvorschub (Zᵥₒᵣ) erfolgt, **dadurch gekennzeichnet, dass** den linearen Schwing- und Vorschubbewegung (Z_{onz}, Zᵥₒᵣ). eine Zirkularoszillation (C_{osz}) und ein Zirkularvorschub (Cᵥₒᵣ) überlagert sind.

2. Verfahren nach Anspruch 1, **dadurch gekennzeichnet, dass** die Linearoszillation und der Linearvorschub und/oder die Zirkularoszillation und der Zirkularvorschub von der Elektrode (12, 13') und/oder dem zu bearbeitenden Werkstück/Rohling (13, 17) ausgeführt wird.

3. Verfahren nach Anspruch 1, **dadurch gekennzeichnet, dass** mit einem als Elektrode dienenden Musterwerkstück (12) zunächst eine Negativform des zu fertigenden Werkstücks oder Werkstückteils hergestellt wird die in der Serienfertigung als Arbeitselektrode (13') eingesetzt wird, wobei die Negativform zunächst bei synchroner Linear- und Zirkularoszillation elektrochemisch in den Rohling (17) eingearbeitet wird und anschließend durch zirkularoszillation mindestens eine der Seitenflächen weiter ausgeformt wird.

4. Verfahren nach Anspruch 1, **dadurch gekennzeichnet, dass** das elektro-chemische Bearbeiten an verschiedenen Bearbeitungspositionen desselben Werkstücks synchron durchgeführt wird.

5. Verfahren nach Anspruch 1, **dadurch gekennzeichnet, dass** das elektro-chemische Bearbeiten an verschiedenen Bearbeitungspositionen desselben Werkstücks separat durchgeführt wird.

## Claims

1. Method for the forming of components of complex shape, in particular turbomachine rotor wheels which constitute a single piece with the blading, by electrochemical material removal, in which, in the presence of an electrolyte, a linear oscillation (Z_{osz}) of an electrode (12, 13') or of a workpiece or blank (13, 17) to be machined is performed relative to each other, with simultaneous, gradual linear feed (Zᵥₒᵣ), **characterized in that** the linear oscillation and feed (Z_{osz}, Zᵥₒᵣ) is superimposed by a circular oscillation (C_{osz}) and a circular feed (Cᵥₒᵣ).

2. Method in accordance with Claim 1, **characterized in that** the linear oscillation and the linear feed and/or the circular oscillation and the circular feed are performed by the electrode (12, 13') and/or the workpiece/blank (13, 17) to be machined.

3. Method in accordance with Claim 1, **characterized in that** a negative of the workpiece or workpiece section to be produced is initially made by means of a sample workpiece (12) serving as electrode, said negative being used as working electrode (13') in series production, with said negative first being machined into the blank (17) in synchronous linear and circular oscillation and with at least one of the side surfaces then being further formed by circular oscillation.

4. Method in accordance with Claim 1, **characterized in that** the various machining positions of one and the same workpiece are electrochemically machined synchronously.

5. Method in accordance with Claim 1, **characterized in that** the various machining positions of one and the same workpiece are electrochemically machined separately.

## Revendications

1. Procédé pour façonner par enlèvement électrochimique des composants aux formes complexes, en particulier des roues mobiles avec aubes intégrales pour machines à écoulement sachant qu'en présence d'un électrolyte une oscillation linéaire (Z_{osz}) d'une électrode (12, 13') ou d'une pièce à usiner ou d'une pièce brute (13, 17) avec simultanément avance linéaire progressive (Zᵥₒᵣ) a lieu, relativement l'une par rapport à l'autre, **caractérisé en ce qu'**une oscillation circulaire (C_{osz}) et une avance circulaire (Cᵥₒᵣ) sont superposées à l'oscillation et à l'avance linéaire (Z_{osz}, Zᵥₒᵣ).

2. Procédé selon la revendication n° 1, **caractérisé en ce que** l'oscillation linéaire et l'avance linéaire et/ou l'oscillation circulaire et l'avance circulaire sont effectuées par l'électrode (12, 13') et/ou la pièce/pièce brute (13, 17) à usiner.

3. Procédé selon la revendication n° 1, **caractérisé en ce qu'**une forme en négatif de la pièce ou de la partie de pièce à fabriquer est tout d'abord façonnée à l'aide d'une pièce échantillon (12) faisant office d'électrode, cette forme en négatif étant utilisée en fabrication de série comme électrode de travail (13'), sachant que la forme en négatif est tout d'abord façonnée de manière électrochimique dans la pièce brute (17) avec simultanément oscillations linéaire et circulaire, et qu'ensuite au moins une des faces latérales est façonnée davantage par oscillation circulaire.

4. Procédé selon la revendication n° 1, **caractérisé en ce que** l'usinage électrochimique est effectué de manière synchrone en différentes positions d'usinage de la même pièce.

5. Procédé selon la revendication n° 1, **caractérisé en ce que** l'usinage électrochimique est effectué séparément en différentes positions d'usinage de la même pièce.
